# NOUVEAU FASCICULE DE BREVET EUROPEEN

(11) **EP 0 316 699 B2**
(45) Date de publication et mention de la décision concernant l'opposition: **25.09.1996**
(45) Mention de la délivrance du brevet: 30.09.1992
(21) Numéro de dépôt: 88118498.0
(22) Date de dépôt: 07.11.1988
(51) Int. Cl.: G06K 7/06, G06K 13/08

(54) **Cadre de contact pour lecteur de carte à puce, avec contact de fin de course**
Kontaktrahmen für IC-Kartenleser mit Endkontakt
Contact frame for an IC card reader having a terminating contact

(30) Priorité: 13.11.1987 FR 8715740
(43) Date de publication de la demande: 24.05.1989
(73) Titulaire: CONNECTORS PONTARLIER, F-92400 COURBEVOIE (FR)
(72) Inventeur: Pernet, Michel, F-25300 Pontarlier (FR)
(74) Mandataire: Vigand, Privat

(56) Documents cités:
- EP-A- 0 231 409
- EP-A- 0 274 288
- DE-A- 3 602 668
- DE-C- 1 137 784
- FR-A- 2 578 072
- GB-A- 2 124 420
- US-A- 4 006 336

## Description

La présente invention concerne les lecteurs de carte à puce. On entend par carte à puce des cartes incluant au moins un composant électronique, avec lequel des connexions électriques doivent être établies, dans un lecteur équipant un appareil exploité au moyen de ce genre de carte (un terminal bancaire ou taxiphone, par exemple).

Les lecteurs de carte à puce comprennent, d'une manière générale, des moyens de guidage ou de positionnement de carte, des moyens servant à vérifier qu'une carte est présente dans le lecteur, dans la position adéquate, ainsi que des éléments de contact qui assurent le raccordement électrique avec des plages conductrices de la carte à puce et par lesquels sont établis des circuits intéressant l'appareil incorporant le lecteur de carte à puce.

Un tel lecteur de carte à puce fait l'objet du document EP-A-0 231 409. Les moyens de guidage y sont des surfaces associées à la structure de lecteur. La vérification de la présence de la carte s'effectue par un microcontact de fin de course et les éléments de contact sont les lames de métal élastiques montées sur une plaque en matière isolante.

Un micro-contact est un composant relativement onéreux pour une telle application, bien que son emploi y soit justifié par des conditions d'environnement difficiles (poussières des cartes, humidité...).

De plus on se trouve en présence de trois pièces respectivement séparées. Or compte tenu des dimensions des parties de contact, en particulier, une telle solution exige à coup sûr l'assemblage précis des différentes pièces, ce qui non seulement est coûteux, mais peut conduire, compte tenu des tolérances de montage cumulées des différentes pièces, à l'impossiblité matérielle de satisfaire aux exigences de l'exploitant. De plus, l'assemblage lui-même est laissé au constructeur de l'appareil, alors que pour celui-ci, le recours à un composant unitaire ne demandant aucune précaution d'emploi serait une facilité appréciée.

Dans la demande de brevet EP-0 274 288, qui fait partie de l'état de la technique au sens de l'article 54(3) CBE, est décrit un lecteur de carte à puce comprenant un cadre de contact sur lequel est monté un contact de fin de course à deux éléments de contact électrique, dont l'un est rigide et fixe.

Le document DE-36 02 668 décrit un cadre de contact pour lecteur de carte à puce conforme au préambule de la revendication 1. Avec un tel cadre de contact, une partie de l'énergie transmise par la carte à la lame mobile du contact de fin de course pour son actionnement est dissipée puisque la lame mobile a une direction d'actionnement orthogonale à la direction du mouvement d'insertion de la carte dans le lecteur. De ce fait, le contact de fin de course risque de ne pas être établi alors que la carte est effectivement en place, de sorte que la présence de la carte dans le lecteur ne peut être détectée de manière sûre.

En outre, l'accumulation de poussières entre les lames du contact de fin de course risque de combler l'espace les séparant, de sorte qu'à terme le contact entre elles ne peut plus s'établir.

L'invention a donc pour objet un cadre de contact pour lecteur de carte à puce dans lequel le contact de fin de course est intégré en une structure unitaire avec au moins les éléments de contact de raccordement à la carte à puce, et est auto-nettoyant.

A cet effet les deux lames du contact de fin de course, avec une certaine distance latérale entre leurs points de fixation, s'étendent largement parallèlement vers leur point de contact dans la région du cadre où se trouve le bord de la carte quand elle est complètement insérée dans le lecteur, et les lames sont disposées de telle sorte que la carte en étant insérée dans le lecteur s'appuie contre la lame mobile en actionnant celle-ci, et un frottement d'une surface de contact par rapport à l'autre selon l'axe des lames est effectué.

Le contact de fin de course est constitué dans un composant unitaire avec les éléments de contact de raccordement, ce qui simplifie le montage du lecteur et résoud les problèmes de tolérances d'assemblage ; il est du type auto-nettoyant, ce qui lui assure la conservation d'une bonne qualité de contact.

Selon un mode de réalisation préféré l'extrémité de la lame stationnaire contactant l'extrémité de la lame mobile est libre dans le cadre entre deux butées, de telle sorte que la lame stationnaire, maintenue élastiquement contre l'une des butées en position non-actionnée du contact de fin de course, accompagne la lame mobile dans son mouvement d'actionnement, tout en passant de l'une à l'autre des butées.

Ainsi le mouvement de la lame stationnaire est libre entre deux butées, ce qui permet la course d'accompagnement nécessaire au nettoyage du contact tout en définissant avec précision l'endroit où s'ouvre le contact, ou plutôt de la commutation contact fermé/contact ouvert. A ce point de commutation correspond une position de la carte à puce telle que la lecture de la carte devient possible (cas du contact de repos) ou n'est plus possible (cas du contact de travail).

La présente invention sera maintenant exposés dans de plus amples détails dans la description qui va suivre, faite à titre d'exemple non limitatif, en se reportant aux figures annexées qui représentent :
- la figure 1, une vue en perspective d'un cadre de contact conforme à la présente invention,
- la figure 2, une vue en plan du cadre de la figure 1,
- la figure 3, une vue de bout du cadre de la figure 1, avec un couvercle formant les glissières de guidage de la carte,
- la figure 4, une vue en plan de la lame repos du contact de fin de course 5 des figures 1 et 2,
- la figure 5, une vue en plan de la lame de contact mobile du contact de fin de course 5 des figures 1 et 2.

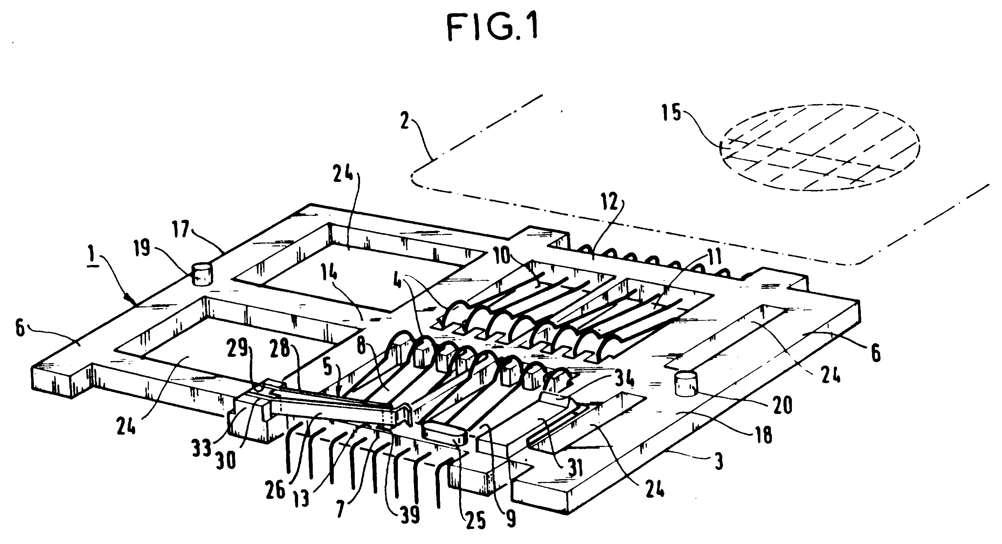

On a représenté, à la figure 1, vu en perpespective, un cadre de contact 1 conçu conformément à la présente invention, avec une carte à puce 2, en position d'insertion. Pour les besoins de la description, ces deux pièces sont représentées à l'envers, par rapport à leur position naturelle, dans laquelle la carte est présentée avec sa zone de contact sur le dessus et dans laquelle le cadre de contact 1 doit se trouver au-dessus de la carte et tourné vers elle. Ce cadre comprend essentiellement une pièce en matière moulée isolante 3 jouant tout à la fois le rôle de support d'éléments de contact 4, servant au raccordement à la puce de la carte 2, de support d'un contact de fin de course 5, indiquant qu'une carte est présente dans le lecteur et qu'elle est en position adéquate pour être lue, et, au moins, de support de glissières 6, servant au guidage de la carte et destinées à la conduire dans la position adéquate indiquée.

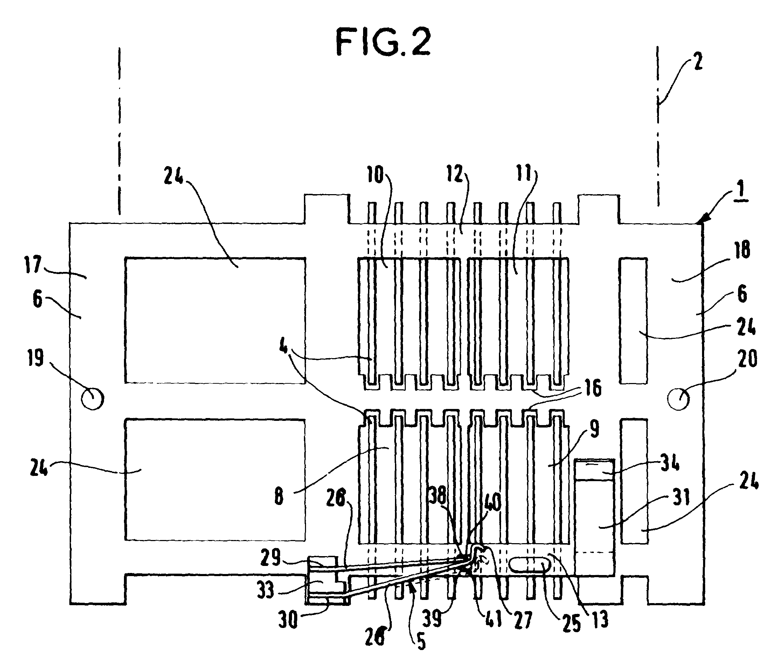

A cette fin, le cadre de contact 1 comprend un cadre intérieur 7 constitué par les parties du cadre 1 délimitant les fenêtres de raccordement 8, 9, 10, 11. Les éléments de contact 4 s'étendent dans ces fenêtres, à partir des barreaux 12, 13 dans lesquels ils sont surmoulés. On conçoit donc que la position des éléments de contact 4 est déterminée par celle d'une partie moule de formation du cadre 1. Les éléments de contact 4 sont profilés et font saillie au-dessus du plan 14 de la surface du cadre 1. Ils doivent venir en contact avec les plages de contact de la zone de raccordement 15 de la carte 1, lorsque celle-ci est correctement insérée dans le lecteur de carte à puce. En se reportant à la figure 2 qui est une vue en plan du cadre de contact de la figure 1, on voit que les fenêtres 8 à 11 comprennent des indentations 16 qui protègent les extrémités des éléments de contact 4.

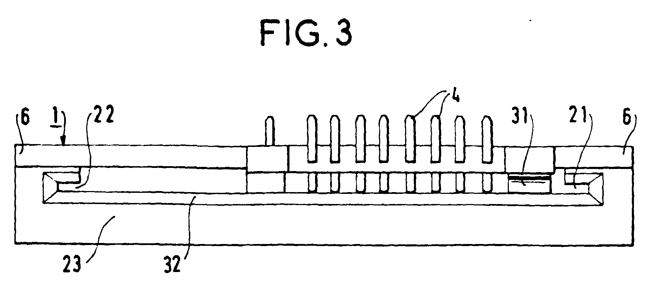

Ce cadre intérieur 7, comme on le voit aux figures 1 et 2, est prolongé par deux ailes 17, 18 qui se terminent, à l'opposé du cadre intérieur 7, par des supports de glissières 6. Ces supports 6 sont de simples surfaces plates, dotées au moins d'un pied de centrage 19, 20. D'autres moyens de positionnement de glissières pourraient être prévus, à la place ou en addition à ceux que l'on vient d'indiquer. Par ailleurs, les pieds de centrage tels que ceux des figures 1 et 2 peuvent également servir de moyens de fixation des glissières (par rivetage, par exemple). On se reportera à la figure 3 qui représente une vue de bout du cadre 1 des figures 1 et 2, dans sa position naturelle, cette fois. On y voit que les glissières 21 et 22 sont formées toutes les deux dans une pièce en matière isolante moulée 23 formant couvercle et qui est montée sur les supports 6 du cadre 1. Cette pièce 23 est précisément positionnée par rapport au cadre 1 par les pieds de centrage 19, 20. Elle guide la carte 2 dont elle enserre les bords. Etant donné que la même partie de cadre que celle qui définit la position des éléments de contact 4 définit également les surfaces 6 et les pieds de centrage 19, 20, la précision dans la localisation de la carte 1 par rapport aux éléments de contact 4 n'est plus tributaire que du soin apporté à la réalisation du moule servant à former le cadre 1 et des tolérances de l'assemblage du cadre 1 et de la pièce 23, lequel peut être réalisé en usine, c'est-à-dire avec des tolérances étroites.

Comme on peut le voir aux figures 1 et 2, les ailes 17, 18 sont avantageusement ajourées, par des évidements 24, pour économiser la matière.

Le cadre de contact 1 porte encore le contact de fin de course 5 et une butée de fin de course 25. Ce contact de fin de course 5 est un contact de repos, s'ouvrant lorsque la carte, peu avant de venir en appui sur la butée de fin de course 25, actionne la lame mobile 26 en appuyant sur son extrémité 27, ce qui la sépare de la lame stationnaire 28. Les deux lames sont insérées à force dans des fentes 29, 30 du cadre 1, ce qui assure la précision de leur positionnement. Par ailleurs, la butée 25 assure le positionnement correct de la carte dans le lecteur de carte à puce.

Bien entendu, le contact de fin de course pourrait être un contact de travail, se fermant au lieu de s'ouvrir.

On voit enfin, aux figures 1 et 2, un poussoir 31, venu de la matière du cadre 1 et qui est une lame élastique destinée à presser la carte à puce 2 contre la pièce 23, ce qui définit sa distance par rapport aux éléments de contact 4.

Ce poussoir, comme l'illustre la figure 3, peut également être formé dans la matière de la pièce 23, à partir de son extrémité que n'atteint pas la carte, revenant en porte-à-faux vers le centre du cadre 1. Son extrémité est profilée de manière à ce qu'il s'efface devant le bord avant de la carte 2, puis exerce sur celle-ci une pression par une surface arrondie, afin d'éviter de la détériorer.

On remarquera accessoirement que l'ouverture pour l'insertion de la carte à puce est chanfreinée en 32, comme il est d'usage.

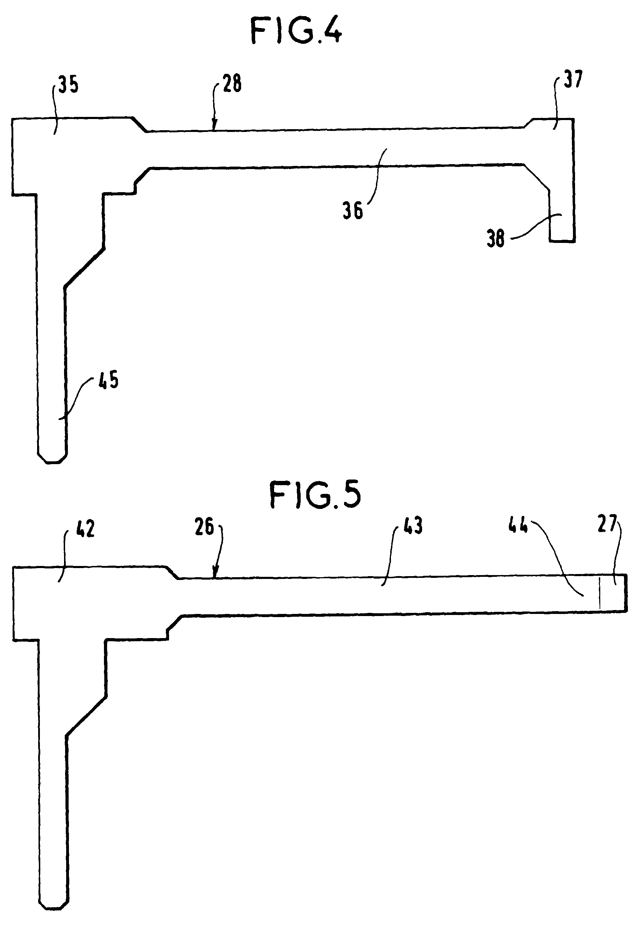

Le contact de fin de course 5 est un contact auto-nettoyant. Il est composé des deux lames de contact 26 et 28 insérées dans deux évidements 29,30 du cadre 1, pratiqués dans un support de contact 33, sorte de bloc dépassant de la surface 14 du cadre 1 et duquel s'étendent les lames, latéralement, à une hauteur telle que l'extrémité 27 de la lame mobile soit dans le chemin d'une carte 2 arrivant en fin de course dans le lecteur. On peut considérer que les deux lames sont articulées à leur sortie du bloc 33. Leurs points d'articulation respectifs sont relativement éloignés l'un de l'autre, par une conformation adéquate du bloc 33. La lame stationnaire 28, dont une vue en plan est fournie à la figure 4, comprend donc un pied de lame 35 qui vient s'insérer dans le cadre 1, seule la patte de raccordement 45 dépassant à la partie inférieure du cadre 1. Le bras 36 s'étend en porte-à-faux parallèlement à la surface 14 du cadre 1 et se termine par une surface de contact profilée 37, en dessous de laquelle s'étend vers le bas un doigt de retenue 38. Ce doigt de retenue pénètre dans un évidement 39 pratiqué dans le cadre 1, qui peut avoir une forme carrée, et qui présente deux surfaces d'appui 40, 41 formant des butées pour le doigt de retenue 38. En position stationnaire, le cambrage de la lame stationnaire 28 est tel qu'elle est soumise à une force élastique dirigée dans le sens du mouvement d'insertion d'une carte. La lame mobile 26, dont une vue en plan est fournie à la figure 5, comprend un pied de la lame 42, un bras en porte-à-faux 43, une surface de contact 44 et une extrémité 27, pliée pour servir de came d'actionnement (voir figures 1 et 2). Cette lame est cambrée de façon à exercer une force élastique en direction de la lame stationnaire 28. La force exercée par la lame mobile 26 est supérieure à celle de la lame stationnaire 28 de sorte que les deux lames, en position non-actionnée, sont ensemble appuyées sur la butée 40 de l'évidement 39.

A l'insertion d'une carte qui vient appuyer sur l'extrémité 27 de la lame 26, la lame 26 se déplace dans le sens d'insertion et la lame 28 la suit, du fait de son propre cambrage. Comme les points d'articulation des deux lames sont espacés, il en résulte un frottement selon l'axe des bras 36, 43 d'une surface de contact par rapport à l'autre, ce qui produit un effet d'auto-nettoyage du contact. Lorsque le doigt de retenue 38 de la lame 28 vient en appui contre la butée 41, le contact entre les deux lames est rompu. Il indique que la carte est complètement insérée. Elle est alors sur le point d'atteindre la butée 25 qui interrompra son mouvement. On notera que, compte tenu des forces de frottement et notamment de celle que produit le poussoir 31, la carte 2 peut rester insérée à fond dans le lecteur de carte, malgré la force de rappel due à la lame mobile 26.

Si le contact de fin de course 5 était un contact travail, comme on en a déjà envisagé la possibilité la lame mobile 26 serait devant la lame stationnaire 28, tout le reste étant inchangé, sauf en ce qui concerne le dimensionnement, la position axiale des éléments devant être telle que le contact 5 se ferme lorsque la carte est exactement dans la même position que dans le cas du contact de repos décrit.

Dans un cas comme dans l'autre, les avantages sont les mêmes.

## Revendications

1. Cadre de contact (1) pour lecteur de carte à puce (2) le cadre portant des éléments de contact (4) raccordement à la carte à puce, et portant en outre deux lames élastiquement déformables (26, 28) de contact électrique constituant un contact de fin de course (5), l'une de ces lames, la lame stationnaire (28), étant couplée au cadre de manière que sa position soit définie par rapport au cadre, tandis que l'autre, la lame mobile (26), est précontrainte, dans une direction opposée à sa direction d'actionnement et est agencée pour que, quand une carte est insérée dans le lecteur, elle soit entraînée dans un mouvement d'actionnement, à l'encontre de sa précontrainte
caractérisé en ce que
les deux lames du contact de fin de course, avec une certaine distance latérale entre leurs points de fixation (29, 30), s'étendent largement parallèlement vers leur point de contact dans la région du cadre où se trouve le bord de la carte quand elle est complètement insérée dans le lecteur, et en ce que les lames sont disposées de telle sorte que la carte (2) en étant insérée dans le lecteur s'appuie contre la lame mobile (26) en actionnant celle-ci, et un frottement d'une surface de contact par rapport à l'autre selon l'axe des lames (26, 28) est effectuée.

2. Cadre de contact conforme à la revendication 1, caractérisé en ce que l'extrémité de la lame stationnaire (28) contactant l'extrémité de la lame mobile est libre dans le cadre entre deux butées (40, 41), de telle sorte que la lame stationnaire (28), maintenue élastiquement contre l'une des butées en position non-actionnée du contact de fin de course, accompagne la lame mobile (26) dans son mouvement d'actionnement, tout en passant de l'une à l'autre des butées.

3. Cadre de contact conforme à la revendication 2, caractérisé en ce que la lame stationnaire (28) comprend un doigt de retenue (38) et que lesdites deux butées (40, 41) sont formées dans la matière du cadre (1), le doigt de retenue coopérant avec ces deux butées pour limiter le mouvement d'accompagnement de la lame stationnaire.

4. Cadre de contact conforme à la revendication 3, caractérisé en ce que lesdites butées sont deux bords opposés d'un évidement (39) pratiqué dans la matière du cadre, ledit doigt de retenue (38) s'étendant dans cet évidement.

5. Cadre de contact conforme à l'une quelconque des revendications précédentes, caractérisé en ce que le contact de fin de course (5) est du type contact de repos.

## Patentansprüche

1. Kontaktrahmen (1) für IC-Kartenleser (2), wobei der Rahmen Kontaktelemente (4) zum Anschluß an die IC-Karte und außerdem zwei elastisch verformbare elektrische Kontaktlamellen (26, 28) trägt, die einen Anschlagkontakt (5) bilden, wobei eine dieser Lamellen, die ortsfeste Lamelle (28), derart mit dem Rahmen verbunden ist, daß ihre Stellung in Bezug auf den Rahmen definiert ist, während die andere Lamelle, die bewegliche Lamelle (26), in einer Richtung entgegengesetzt zu ihrer Betätigungsrichtung vorgespannt und so angeordnet ist, daß sie entgegen der Vorspannung in eine Betätigungsbewegung gelangt, wenn eine Karte in den Leser eingeführt wird, dadurch gekennzeichnet, daß die beiden den Anschlagkontakt bildenden Lamellen mit einem gewissen seitlichen Abstand zwischen ihren Befestigungspunkten (29, 30) sich im wesentlichen parallel in Richtung auf ihren Kontaktpunkt in die Zone des Rahmens erstrecken, in der sich der Rand der Karte befindet, wenn sie ganz in den Leser hineingesteckt ist, und daß die Lamellen so angeordnet sind, daß die Karte (2) nach ihrer Einführung in den Leser auf die bewegliche Lamelle (26) drückt und sie betätigt, wobei eine Kontaktfläche auf der anderen in Richtung der Achse der Lamelle (26, 28) reibt.

2. Kontaktrahmen nach Anspruch 1, dadurch gekennzeichnet, daß das Ende der ortsfesten Lamelle (28) in Kontakt mit dem Ende der beweglichen Lamelle im Rahmen zwischen zwei Anschlägen (40, 41) frei ist, so daß die ortsfeste Lamelle (28), die in der unbetätigten Stellung des Anschlagkontakts elastisch gegen einen der Anschläge gehalten wird, die bewegliche Lamelle (26) in ihrer Betätigungsbewegung begleitet und dabei von dem einen Anschlag zum anderen übergeht.

3. Kontaktrahmen nach Anspruch 2, dadurch gekennzeichnet, daß die ortsfeste Lamelle (28) einen Rückhaltefinger (38) aufweist und daß die beiden Anschläge (40, 41) am Rahmen (1) ausgebildet sind, wobei der Rückhaltefinger mit diesen beiden Anschlägen zusammenwirkt, um die Begleitbewegung der ortsfesten Lamelle zu begrenzen.

4. Kontaktrahmen nach Anspruch 3, dadurch gekennzeichnet, daß diese Anschläge zwei einander entgegengesetzte Ränder einer Vertiefung (39) im Rahmen sind und daß der Rückhaltefinger (38) in diese Vertiefung hineinragt.

5. Kontaktrahmen nach einem beliebigen der vorhergehenden Ansprüche, dadurch gekennzeichnet, daß der Anschlag-Kontakt (5) vom Ruhekontakt-Typ ist.

## Claims

1. A contact frame (1) for an IC card reader (2), the frame bearing contact elements (4) for making connections with the IC card, and further bearing two resiliently deformable electric contact blades (26, 28) constituting an end-of-stroke contact (5), one of the blades, the stationary blade (28), being coupled to the frame in such a manner that its position is defined relative to the frame, while the other blade, the moving blade (26), is preloaded in a direction opposite to its direction of actuation and is disposed in such a manner that a card, when inserted into the reader, imparts an actuating motion to said blade against its preload face, characterized in that the two end-of-stroke contact blades are anchored at points (29, 30) having a certain lateral distance from each other and extend substantially in parallel towards their point of contact in the frame region which the card reaches when it is completely inserted into the reader, and that the blades are disposed in such a way that the card (2), after having been inserted into the reader, abuts against the moving blade (26) and actuates it, thereby causing a friction movement of one contact surface on the other along the axis of the blades (26, 28).

2. A contact frame according to claim 1, characterized in that the end of the stationary blade (28) in contact with the moving blade is free to move between two abutments (40, 41), with the stationary blade (28) being resiliently maintained against a first one of the abutments in the non-actuated state of the end-of-stroke contact and accompanying the moving blade (26) during its actuating motion while passing from said first abutment to the other.

3. A contact frame according to claim 2, characterized in that the stationary contact blade (28) includes a retaining finger (38) and in that said two abutments (40, 41) are formed in the material of the frame (1), with the retaining finger co-operating with said two abutments in order to limit the accompanying motion of the stationary blade.

4. A contact frame according to claim 3, characterized in that said abutments are two opposite sides of s slot (39) made through the material of the frame, with said retaining finger (38) extending into said slot.

5. A contact frame according to any preceding claim, characterized in that the end-of-stroke contact (5) is of the rest contact type.
